(19) Europäisches Patentamt
European Patent Office
Office européen des brevets

(11) **EP 3 663 093 B1**

(12) **EUROPEAN PATENT SPECIFICATION**

(45) Date of publication and mention of the grant of the patent:
**14.09.2022 Bulletin 2022/37**

(21) Application number: **19158424.2**

(22) Date of filing: **21.02.2019**

(51) International Patent Classification (IPC):
**B41J 11/00** *(2006.01)*    **F26B 13/18** *(2006.01)*

(52) Cooperative Patent Classification (CPC):
**B41J 11/00242; F26B 13/183**

(54) **METHOD OF CONTROLLING A DRYING DRUM FOR AN INKET PRINTER**

STEUERVERFAHREN EINES TROCKNUNGSTROMMEL EINES TINTENSTRAHLDRUCKERS

PROCÉDÉ DE CONTRÔLE D'UN TAMBOUR DE SECHAGE POUR IMPRIMANTE À JET D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2018 JP 2018227702**

(43) Date of publication of application:
**10.06.2020 Bulletin 2020/24**

(73) Proprietor: **Miyakoshi Printing Machinery Co., Ltd. Narashino-shi**
**Chiba 275-0016 (JP)**

(72) Inventors:
• **IZAWA, Hideo**
**Chiba, Chiba 275-0016 (JP)**
• **KOMATSUDA, Seiji**
**Akikta, Akita 013-0443 (JP)**
• **TAMURA, Eiichi**
**Akita, Akita 013-0443 (JP)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 3 034 310      EP-A1- 3 070 533**
**WO-A1-01/31271      DE-A1-102016 225 090**
**JP-A- 2001 141 364      US-B2- 8 596 777**
**US-B2- 8 646 893      US-B2- 9 815 296**

**Description**

Technical Field

The present invention relates to an inkjet printer, and more specifically relates to an inkjet printer provided with a controller for controlling making a temperature of a drying drum to a target temperature.

Background Art

In the field of printing, a medium after printing obtained by performing an inkjet type of printing to a medium before printing is heated and dried by a heating apparatus.

At this time, in order to heat and dry the medium after printing efficiently, various heating controls are performed to the heating apparatus.

As such a heating control, for example, a PID control which is a kind of feedback control is known. The PID control controls an input value using three elements of a deviation between an output value and a target value, an integral thereof, and a differential thereof.

Further, as specific examples, are known a recording apparatus which performs a heater temperature control for controlling a value of current to be flown into a heater such that a heater temperature at which ink dries properly to achieve a high print quality can be obtained and which adopts a feedback control such as the PID control for the temperature control (for example, see PTL 1), a recording medium conveying apparatus which uses a PI control for controlling a calorific value to be applied by integrating a deviation (a residual deviation) between a target temperature and a actually measured temperature in a time axial direction, a PID control which further adds a change rate obtained by differentiating a change in actually measured temperature by time, or the like (for example, see PTL 2), a process liquid applying apparatus which determines a lighting duty ratio of a heater set at 0% to 100% from a difference (a proportional part) between a control target temperature and a current temperature in a certain fixed cycle in a period elapsing until printing is performed and performs, at a control part, a control such that a temperature of a heating roller reaches a target temperature by using the lighting duty ratio (for example, see PTL 3), an inkjet printer where a control part controls a first heater and a second heater based upon a detection temperature detected by a temperature sensor and adjusts a power of the second heater according to a difference between the detection temperature and a drying temperature (for example, see PTL4), and the like.

US 8 646 893 B2 discloses an inkjet printer comprising a printing part for applying ink to a medium before printing, a drying drum for heating and drying a medium after printing having the ink applied in contact with an outer circumstantial phase of the drying drum, and a controller capable of individually of controlling heating of a plurality of sections obtained by dividing the drying drum along a plane perpendicular to a shaft direction of the drying drum, wherein each of the sections is mounted with a heater part capable of eating the corresponding section, and heating of the heater parts of all of the sections is continuously controlled individually by the controller. EP 3 070 533 A1, US 8 596 777 B2 and US 9 815 296 B2.

EP 3 034 310 A1, WO 01/31271 A1 and JP 2001 141364 A disclose segmented drying drums with the control of the temperature of each segment.

Citation List

Patent Literature

PTL 1: Japanese Patent Application Laid-Open No. 2009-226755
PTL 2: Japanese Patent Application Laid-Open No. 2012-131065
PTL 3: Japanese Patent Application Laid-Open No. 2015-112543
PTL 4: Japanese Patent Application Laid-Open No. 2015-205476

Summary of Invention

Technical Problem

However, in the heating controls described in PTL 1 to PTL 4, temperatures of the heating apparatuses can be elevated efficiently, but occurrences of temperature unevenness cannot be suppressed in the heating apparatuses themselves.

Further, in the inkjet printer, since an amount of ink applied in a widthwise direction of a medium after printing is not necessarily constant, the problem is that a temperature of a portion of the heating apparatus for heating and drying a portion of the medium after printing having a large amount of ink applied is not sufficiently elevated as compared with temperatures of the other portions of the heating apparatus. As a result, the problem causes a drying failure.

The present invention has been made in view of the above-described circumstances, and an object thereof is to provide a controlling method of an inkjet printer capable of suppressing temperature unevenness of a drying drum itself which is the heating apparatus as much as possible.

Solution to Problems

As a result of intensive research, the present inventors have found that the above problem can be solved by dividing a drying drum into a plurality of sections and controlling heating of each section individually, and have completed the present invention.

The present invention lies in (1) a controlling method of an inkjet printer according to claim 1.

The present invention lies in (2) the controlling method of an inkjet printer according to above aspect (1) wherein the storage part further stores a PID operation expression therein; the operation part further computes the updated output ratio based upon the PID operation expression if the temperature difference between the actually measured temperature and the target temperature is within a predetermined temperature range defined freely; the PID operation expression is used to convert the updated output ratio into a PID output ratio based upon elements of a deviation between the actually measured temperature and the target temperature, an integral of the deviation, and a differential of the deviation; and by the controller, heating of the heater parts of the respective sections is continuously controlled with the PID output ratios.

The present invention lies in (3) the controlling method of an inkjet printer according to the above aspect (1) wherein the storage part further stores a PID operation expression and a gain UP operation expression therein; the operation part further operates the updated output ratio based upon the PID operation expression and the gain UP operation expression if the
temperature difference between the actually measured temperature and the target temperature is within a predetermined temperature range defined freely; the PID operation expression is used to convert the updated output ratio into a PID output ratio based upon elements of a deviation between the actually measured temperature and the target temperature, an integral of the deviation, and a differential of the deviation; the gain UP operation expression is used to add a surplus output ratio obtained by subtracting the PID output ratio of each of the heater parts of the sections from the updated output ratio of the sections to the PID output ratio of the heater part of the section the actually measured temperature of which is low; the output limitation operation expression is used to adopt the PID output ratio having the surplus output ratio added based on the gain UP operation expression as an updated PID output ratio if the PID output ratio is 100% or less, and to adopt the output ratio of 100% as the updated PID output ratio if the output ratio exceeds 100%; and by the controller, heating of the heater parts of the respective sections is continuously controlled with the updated PID output ratio.

The present invention lies in(4) the controlling method of an inkjet printer described in any one of the above aspects (1) to (3) wherein the printing part has a printing head of a line head type; and the heater part is a band heater or a rubber heater attached along an inner circumstantial face of the drying drum.

Advantageous Effects of Invention

In the controlling method of an inkjet printer of the present invention, the drying drum is divided into a plurality of sections and the controller continuously controls heating of the heater parts of all the sections individually, so that temperature unevenness between the sections can be suppressed. As a result, the temperature of the entire drying drum can be elevated efficiently and uniformly.

Further, in the controlling method of an inkjet printer, regarding a widthwise direction of the heated body, the controller improves a degree of heating of the section of the drum which heats and dries a portion of the medium after printing having a large amount of ink applied
compared with the other sections, so that lowering of a temperature of the section as compared with temperatures of the other sections can be suppressed. As a result, occurrence of a drying failure of the medium after printing can be suppressed.

Further, for example, when a width of the medium after printing is small, it is also possible to turn off a power source of the band heater or the rubber heater attached to the section which does not contact with the medium after printing. Thereby, consumption of energy can be reduced. It is to be noted that, even in this case, the controller continuously controls heating of the heater parts of the sections having the power sources turned on, so that temperature uneven between the sections having the power sources turned on can be suppressed regardless of an influence of the section having the power source turned off.

Specifically, the heater parts are configured to be capable of heating the sections according to the output ratios, the controller controls heating starts of the heater parts of the sections with the initial output ratio set freely, and continuously controls heating of the heating parts of the respective sections after the heating start with the updated output ratios computed using the output increase/decrease operation expression and the output limitation operation expression, so that an output ratio in the heater part of the section having an actually measured temperature lower than an average temperature can be increased in the course of the actually measured temperature reaching the target temperature. Thereby, the actually measured temperature of the section having the actually measured temperature lower than the average temperature can be improved.

Further, at this time, the temperature unevenness is counteracted by simultaneously lowering, the output ratio in the heater part of the section having the actually measured temperature higher than the average temperature, and excellent energy efficiency is obtained.

In addition, when the output ratio is computed based upon the output increase/decrease operation expression, if the output ratio exceeds 100% formally, the output ratio is limited to 100% or less by the output limitation operation expression, so that the update output ratio does not exceed 100%. Therefore, a merit that occurrence of an error or the like can be suppressed is obtained.

In the controlling method of an inkjet printer of the present invention, if the temperature difference between the actually measured temperature and the target temperature is within a predetermined temperature range defined freely, heating of the heating parts of the respective sections is continuously controlled with the PID output ratio obtained by computing the updated output ratio using the PID operation expression, so that control can be performed efficiently when the actually measured temperature comes close to the target temperature. That is, when the temperature difference between the actually measured temperature and the target temperature is within a predetermined temperature range defined freely, the plurality of sections are already sufficiently heated, so that, by adopting the PID output ratio taking into consideration not only the output increase/decrease operation expression but also the PID operation expression which is a so-called proportional control, the output ratio in the heater part of the section the temperature difference between the actually measured temperature and the target temperature of which is small can be decreased, while the output ratio in the heater part of the section the temperature difference between the actually measured temperature and the target temperature of which is large can be increased. Thereby, the energy efficiency can be further improved.

Incidentally, the PID operation expression is an expression based upon a known PID control. It is to be noted that the PID control is a known control performed by three elements: proportional control P; integral control I; and differential control D.

In addition thereto, in the controlling method of an inkjet printer, if the temperature difference between the actually measured temperature and the target temperature is within a predetermined temperature range defined freely, heating of the heater parts of the respective sections is continuously controlled with an updated PID output ratio obtained by computing the PID output ratio using the gain UP operation expression, so that the surplus output ratio which is not being used can be used in addition to the PID output ratio of the heater part
of the section the actually measured temperature of which is bw. Thereby, temperature unevenness between the sections can be further suppressed. Further, since a time until the actually measured temperature reaches the target temperature can be shortened, the energy efficiency can be still further more improved.

Furthermore, similarly to the above-described matter, when the updated PID output ratio is computed based upon the gain UP operation expression, if the updated PID output ratio exceeds 100% formally, the output ratio is limited to 100% or less by the output limitation operation expression, so that the updated PID output ratio does not exceed 100%. Therefore, the merit that occurrence of an error or the like can be suppressed is obtained.

In the controlling method of an inkjet printer of the present invention, since, in a case where the printing part has a printing head of a line head type, the medium after printing can be conveyed faster than in a case where the printing part has a printing head of a serial head type, as described above, if a portion has a larger amount of ink applied, the temperature of the section corresponding to the portion can be elevated positively, otherwise a drying failure of the medium after printing may easily occur, so that occurrence of a drying failure can be suppressed.

Accordingly, when the printing part has the printing head of a line head type, the inkjet printer is extremely preferred since the inkjet printer can perform printing at high speed, and a drying failure can be suppressed.

Further, when the heating part is a band heater or a rubber heater attached to an inner circumferential face of the drying drum, the merit that the sections of the respective drying drum are easy to heat is obtained.

Brief Description of Drawings

Figure 1 is a schematic side view showing an embodiment of an inkjet printer according to the present invention;

Figure 2 is a perspective view showing a drying drum of the inkjet printer according to the present embodiment;

Figure 3 is a horizontal sectional view of the drying drum of the inkjet printer according to the present embodiment;

Figure 4 is a block diagram for illustrating a controller of the inkjet printer according to the present embodiment;

Figure 5A is a block diagram for illustrating a flow where an operation part performs operation when a temperature difference between an actually measured temperature and a target temperature is not within a predetermined temperature range defined freely in the controller of the inkjet printer according to the present embodiment;

Figure 5B is a block diagram for illustrating a flow for the operation part to perform operation when the temperature difference between an actually measured temperature and a target temperature is within the predetermined temperature range defined freely; and

Figure 6 is an illustrative diagram for illustrating a control flow of a heater part in the inkjet printer according to the present invention.

Description of Embodiments

A preferred embodiment of the present invention is described in detail below with reference to the drawings as necessary. It is to be noted that a same element is denoted by a same reference sign in the drawings and thus not repeatedly described. Further, a positional relationship such as up, down, left, right and the like is based upon a positional relationship shown in the drawings, unless otherwise noted. In addition, a size ratio of the drawing is not limited to a ratio shown in the drawing.

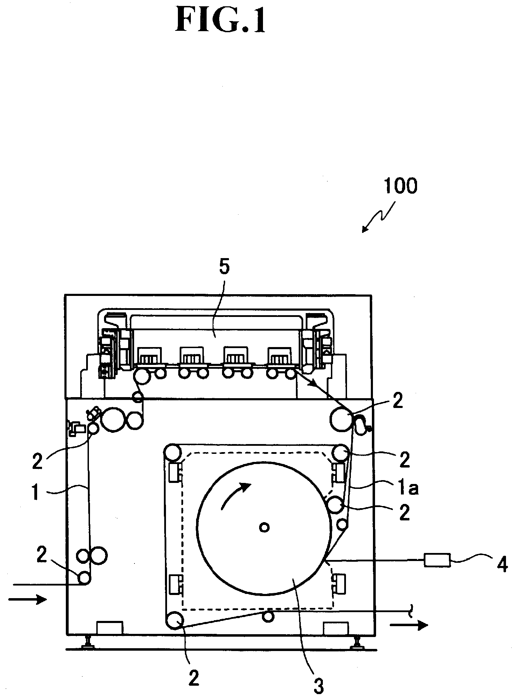

Figure 1 is a schematic side view showing one embodiment of an inkjet printer according to the present invention.

As shown in Figure 1, an inkjet printer 100 according to the present embodiment has a printing part 5 for applying ink to a medium before printing 1, a drying drum 3 for heating and drying a medium after printing 1a having the ink applied, a controller 4 capable of controlling heating of each of a plurality of sections obtained by dividing the drying drum 3 along planes perpendicular to a shaft direction of the drying drum 3, and a plurality of guide rolls 2 for guiding the medium before printing 1 or the medium after printing 1a.

In the inkjet printer 100, heating of heating parts of all of the sections can be continuously controlled by one controller 4 individually.

Here, the continuous control means control where control actions are performed temporarily continuously. Specifically, the continuous control means monitoring temperatures of sections 31al, 31a2, and 31a3 constantly and controlling outputs thereof steplessly, respectively.

Thereby, in the inkjet printer 100, occurrence of temperature unevenness in the drying drum 3 itself can be suppressed. That is, it becomes possible to elevate the temperature of the entire drying drum 3 to a target temperature uniformly and efficiently.

Further, after the temperature of the drying drum 3 is elevated to the target temperature, such an event that the medium after printing 1a coming into contact with an outer circumstantial face of the drying drum 3 causes partial non-elevation of the temperature can be prevented from occurring. As a result, occurrence of a drying failure of the medium after printing 1a can be suppressed.

In the inkjet printer 100, an elongated medium before printing 1 introduced from a paper feeding part (not shown) is guided by the guide rolls 2 and formed into the medium after printing 1a by applying ink thereto in a printing part 5.

Next, the medium after printing 1a is further guided by the guide rolls 2 to come into contact with the outer circumstantial face of the drying drum 3 in a winding manner, so that the medium after printing 1a is heated and dried by the drying drum 3.

Then, the heated and dried medium after printing 1a is further guided by the guide rolls 2 to be recovered in a recovering part (not shown).

Here, as the medium before printing 1, for example, paper, fabric, non-woven fabric, a film, a metal foil, and the like can be adopted. It is to be noted that these media before printing may each have an ink receiving layer made from resin for receiving ink on a surface on an ink application side.

Further, the printing part 5 has a printing head of a line head type. That is, the inkjet printer 100 is of a system where a fixed printing head performs printing to the medium before printing 1 running. Therefore, while the medium before printing is being conveyed at high speed, inkjet printing can be performed thereto, and as described above, occurrence of a drying failure of the medium after printing can be suppressed.

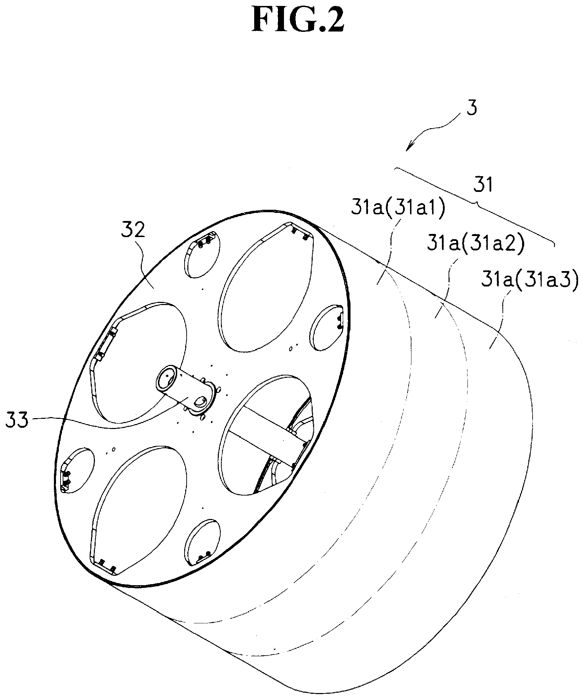

Figure 2 is a perspective view showing a drying drum of the inkjet printer according to the present embodiment.

As shown in Figure 2, the drying drum 3 is provided with a cylindrical main body portion 31, disk-shaped rim portions 32 attached to both sides of the main body portion 31, and a shaft 33 attached to the disk-shaped rim portions 32.

Further, in the drying drum 3, the main body portion 31, the rim portions 32 and the shaft 33 are integrated. That is, the rim portions 32 and the shaft 33 are also rotated by rotating the main body portion 31.

In the drying drum 3, the main body portion 31 is cylindrical and at least has the outer circumferential face configured to be heated.

Therefore, the medium after printing 1a is heated and dried by coming into contact with the outer circumferential face of the main body portion 31.

As a material of the main body portion 31, metal such as aluminum can be used.

An outer circumferential face of the main body portion 31 may be embossed using sand blast, shot blast, bead blast, or the like. In this case, when the medium after printing 1a and the outer circumferential face of the drying drum 3 (the main body portion 31) come into contact with each other, even if air comes in therebetween, the air can escape from gaps formed by the embossed face of the drying drum 3, so that close contact of the medium after printing 1a to the drum can be improved. As a result, lowering of a drying efficiency of the medium after printing 1a can be suppressed.

In the drying drum 3, the main body portion 31 is composed of three sections 31a obtained by dividing the drying drum 3 along planes perpendicular to a shaft direction of the drying drum 3. That is, in the inkjet printer 100, as described above, the drying drum 3 is divided into three sections 31a sectioned along the planes perpendicular to the shaft direction and heating of the respective sections 31a is controlled. It is to be noted that the three sections 31a are separated inside the drying drum 3, so that the sections 31a cannot be recognized from an appearance of the drying drum 3.

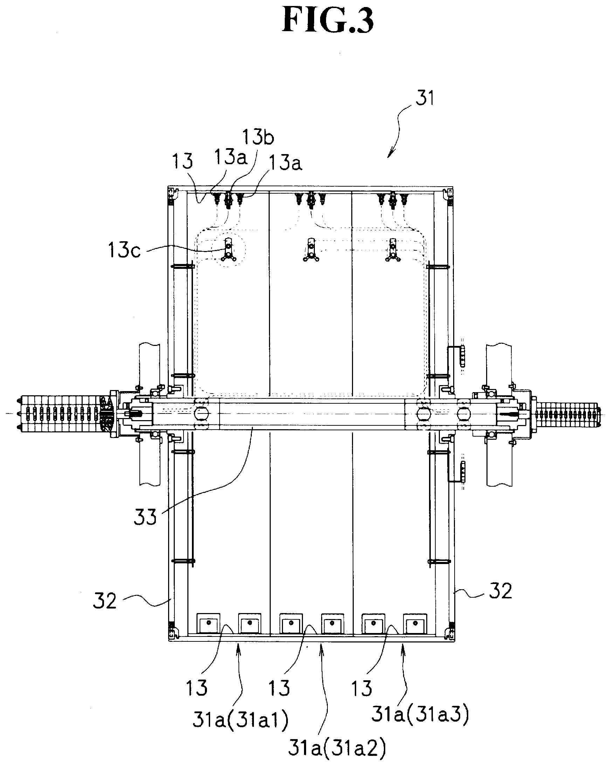

Figure 3 is a horizontal sectional view of the drying drum of the inkjet printer according to the present embodiment.

As shown in Figure 3, in the drying drum 3, the sections 31a are each mounted with a heater part 13 capable of heating a corresponding section 31a according to an output ratio, a power supply terminal 13a of the corresponding heater part 13, a temperature detecting part 13b for detecting a temperature of the corresponding section 31a, and a thermostat 13c for shutting down power supply to the corresponding heater part 13 in the event of abnormal heating.

Here, in the inkjet printer 100 according to the present embodiment, as the heater part 13, a band heater or a rubber heater is adopted, and as the temperature detecting part 13b, a thermocouple is adopted.

Here, the term "output ratio" means a percentage of an output capacity. It is to be noted that a unit of the output ratio is % (percent). That is, when power is supplied to the heater part 13, a maximum output ratio in the heater part 13 is 100%, while a minimum output ratio therein is 0%.

It is to be noted that a phase of an AC power source is controlled to supply power to the heater part 13 in the inkjet printer 100. At this time by using a thyristor to change a ratio of ON time for each cycle of the AC current, adjustment of the output ratio is achieved.

The heater part 13 is attached to the inside of the main body portion 31 along an inner circumferential face of the main body portion 31.

Further, regarding the heater part 13, three heater parts 13 are provided in parallel in a widthwise direction of the drying drum 3 so as to correspond to the three sections 31a of the main body portion 31. That is, one heater part 13 (for example, the band heater or the rubber heater) is attached to each section 31a. Therefore, the respective sections 31a are heated independently by the heater parts 13 attached to the corresponding sections 31a, so that heating is performed by heat conduction from the inner circumferential face of the drying drum 3 to the outer circumferential face of the drying drum 3.

In addition, for example, when a width of the medium after printing 1a is small, it is also possible to turn off the power source of the heater part 13 attached to a section 13a which does not come into contact with the medium after printing 1a. Thereby, energy consumption can be reduced.

The thermocouple (the temperature detecting part 13b) is arranged so as to project within the corresponding heater part 13 from the heater part 13, and a detecting portion of the thermocouple abuts on the inner circumferential face of the main body portion 31 via a hole provided in the heater part 13. Thereby, the thermocouple can detect an actual temperature at that time (hereinafter, called "actually measured temperature") of the main body portion 31 of the corresponding section.

Returning to Figure 1, in the inkjet printer 100, the controller 4 is connected to the heater parts 13 and the thermocouples (the temperature detecting parts 13b) of all of the sections 31a via a wired or wireless network.

The controller 4 is configured to be capable of receiving temperature signals of actually measured temperatures from the temperature detecting portions 13b of the respective sections 31a and transmitting output ratio signals of the output ratios to the heater parts 13.

Therefore, in the inkjet printer 100, heating of the heater parts 13 of the respective sections 31a can be simultaneously controlled by the controller 4.

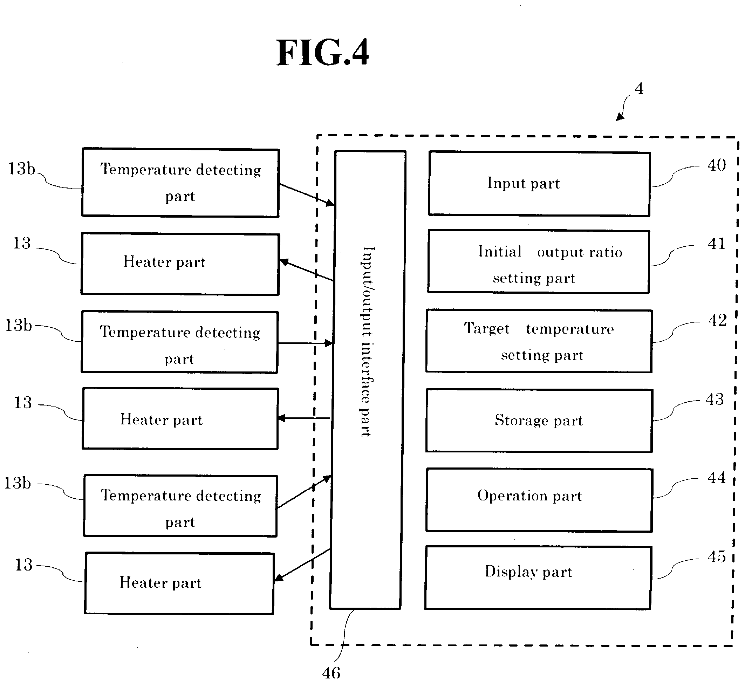

Figure 4 is a block diagram for illustrating the controller of the inkjet printer according to the present embodiment.

As shown in Figure 4, the controller 4 has an input part 40, an initial output ratio setting part 41, a target temperature setting part 42, a storage part 43, an operation part 44, a display part 45, and an input/output interface part 46, and is therefore provided with a configuration as a so-called computer.

In the controller 4, Ethernet (registered trademark), a port or the like is appropriately used as the input/output interface part 46.

The input/output interface part 46 receives the temperature signals of the actually measured temperatures from the temperature detecting portions 13b and transmits the temperature signals to the storage part 43. It is to be noted that the actually measured temperatures are stored in the storage part 43.

Further, as described later, the input/output interface part 46 receives the output ratio signal of the output ratio (including an updated output radio or the like) computed by the operation part 44 and transmits the output ratio signal to the heater part 13.

The initial output ratio setting part 41 is used to set an initial output ratio, namely, an output ratio at a heating start time (an initial output ratio) via the input/output interface part 46 by operation through the input part 40.

Such an initial output ratio can be defined freely in a range of more than 0% and less than or equal to 100%. The initial output ratio is preferably in a range of 50% to 80% in view of the heating efficiency.

It is to be noted that the set initial output ratio is stored in the storage part 43.

The target temperature setting part 42 is used to set the target temperatures of the plurality of sections 31a via the input/output interface part 46 by operation through the input part 40.

Such a target temperature is common to the plurality of sections 31a, and can be set freely in a range which can heat and dry the medium after printing 1a sufficiently and which does not damage the medium after printing 1a or peripherals. When ink containing moisture is applied to the medium before printing 1, the target temperature is preferably in a range of 100° to 140°, more preferably in a range of 100° to 120° from a viewpoint of the drying efficiency.

It is to be noted that the set target temperature is stored in the storage part 43.

As the storage part 43, a memory such as RAM, ROM or the like is appropriately used.

Further, an operation program for computing the output ratio is stored in the storage part 43. Specifically, as the operation program, an output increase/decrease operation expression, an output limitation operation expression, a PID operation expression, and a gain UP operation expression are stored for controlling the output ratio in the storage part 43.

Here, the output increase/decrease operation expression obtains an additional output ratio by multiplying a temperature difference obtained by subtracting an actually measured temperature of a specific section 31a from an average temperature of actually measured temperatures detected by the temperature detecting parts 13b of the respective sections 31a by a coefficient set freely and adds the additional output ratio to an initial output ratio of the specific section 31a.

For example, when the respective sections 31a are assumed as a first section 31a1, a second section 31a2, and a third section 31a3, an actually measured temperature detected by the temperature detecting part 13b of the first section 31al is assumed as T1, an actually measured temperature detected by the temperature detecting part 13b of the second section 31a2 is assumed as T2, an actually measured temperature detected by the temperature detecting part 13b of the third section 31a3 is assumed as T3, the coefficient set freely is assumed as k, and the initial output ratio of the first section 31al is assumed as P%, and the output ratio computed in the first section 31al is assumed as Pz%, the output increase/decrease operation expression to the first section 31a1 is expressed as:

$$Pz = P + k \, ((T1 + T2 + T3)/3 - T1).$$

Thereby, in the output increase/decrease operation expression, if the actually measured temperature T1 is lower than the average temperature ((T1 + T2 + T3)/3), the additional output ratio obtained by multiplying the temperature difference by the coefficient becomes a positive value, so that the output ratio Pz obtained becomes larger than the initial output ratio P.

On the other hand, if the actually measured temperature T1 is higher than the average temperature ((T1 + T2 + T3)/3), the additional output ratio obtained by multiplying the temperature difference by the coefficient becomes a negative value, so that the output ratio Pz obtained becomes smaller than the initial output ratio P.

Further, if the average temperature ((T1 + T2 + T3)/3) and the actually measured temperature T1 are equal to each other, the additional output ratio becomes zero, so that the computed output ratio Pz becomes equal to the initial output ratio P.

It is to be noted that a specific example of the output increase/decrease operation expression in the first section 31a1 is shown here, but operations are also similarly performed regarding the second section 31a2 and the third section 31a3.

Further, in the output increase/decrease operation expression, the coefficient k is a positive integer and is judged based upon how large the variation in the temperature between the respective sections.

In this manner, in the inkjet printer 100, by the controller 4, the output ratio in the heater part 13 of the section 31a having the actually measured temperature lower than the average temperature can be increased, and the output ratio in the heater part 13 of the section 31a having the actually measured temperature higher than the average temperature can be decreased, so that the energy efficiency becomes excellent.

When the output ratio Pz to which the additional output ratio is added based upon the output increase/decrease operation expression is 100% or less, the output limitation operation expression adopts the output ratio as an updated output ratio, and when the output ratio Pz exceeds 100%, the output limitation operation expression adopts the output ratio of 100% as the updated output ratio. That is, in the controller 4, the output limitation operation expression prevents the updated output ratio from exceeding 100%, otherwise the output ratio Pz may formally exceed 100% as a result of addition of the additional output ratio to the initial output ratio P according to the output increase/decrease operation expression. Thereby, the inkjet printer 100 has a merit that occurrence of an error or the like can be suppressed.

The PID operation expression is an operation expression based upon a known PID control.

It is to be noted that the PID control is a control which is a combination of three actions: a proportional action (proportional gain) for controlling an output ratio in proportion to a deviation between an actually measured temperature and a target temperature; an integral action (integral gain) for performing control in proportional to an integral value of the deviation; and a differential action (differential gain) for performing control in proportional to a differential value of the deviation. It is to be noted that since the operation expressions of the proportional action, the integral action, and the differential action are known, explanation thereof is omitted.

In the controller 4, the updated output ratio computed according to the output limitation operation expression is further computed according to the PID operation expression to be converted to the PID output ratio.

In this manner, in the inkjet printer 100, since operation is performed by the controller 4 based upon not only the output increase/decrease operation expression but also the output PID operation expression, the output ratio of an output value in the heater part 13 of the section 31a having a small temperature difference between the actually measured temperature and the target temperature can be decreased, while the output ratio of an output value in the heater part 13 of the section 31a having a large temperature difference between the actually measured temperature and the target temperature can be increased. Therefore, particularly, when the plurality of sections 31a are in a sufficiently heated state, the energy efficiency becomes further excellent.

The gain UP operation expression is for adding a surplus output ratio obtained by subtracting the PID output ratios from the updated output ratios of the respective sections 31a to the PID output ratio of a section 31a having a low actually measured temperature.

For example, when the updated output ratios of the respective sections 31a are assumed as Pk1, Pk2, and Pk3, and the PID output ratios are assumed as PP1, PP2, and PP3, the surplus output ratio PY is expressed as:

$$PY = (Pk1 - PP1) + (Pk2 - PP2) + (Pk3 - PP3).$$

Then, when the PID output ratio of the heater part 13 of the section 31a of the plurality of sections 31a having a low actually measured temperature is assumed as PP1 and the computed output ratio is assumed as PG%, the gain UP operation expression is expressed as

$$PG = PP1 + PY.$$

In this manner, in the inkjet printer 100, since the output ratio in the heater part 13 of the section 31a of the respective sections 31a having a low actually measured temperature can be increased by the controller 4, the temperature unevenness between the sections 31a can be suppressed.

Further, since a time elapsing until reaching the target temperature can be shortened, the energy efficiency becomes further more excellent.

In the controller 4, operation is performed again according to the above-described output limitation operation expression.

If the PID output ratio to which the surplus output ratio has been added based upon the gain UP operation expression is 100% or less, the output limitation operation expression adopts the PID output ratio as the updated PID output ratio, and if the PID output ratio exceeds 100%, the output limitation operation expression adopts the output ratio 100% as the updated PID output ratio. That is, in the controller 4, the output limitation operation expression prevents the updated PID output ratio from exceeding 100%, otherwise the output ratio may formally exceed 100% as a result of addition of the surplus output ratio to the PID output ratio at that time according to the gain UP operation expression.

Thereby, in the inkjet printer 100, occurrence of an error or the like can be suppressed.

As the operation part 44, a CPU (Central Processing Unit) or the like can be used.

The operation part 44 performs operations according to a predetermined flow based upon the initial output ratio, the target temperature, the actually measured temperature, the output increase/decrease operation expression, the output limitation operation expression, the PID operation expression, the gain UP operation expression, and the like stored in the storage part 43.

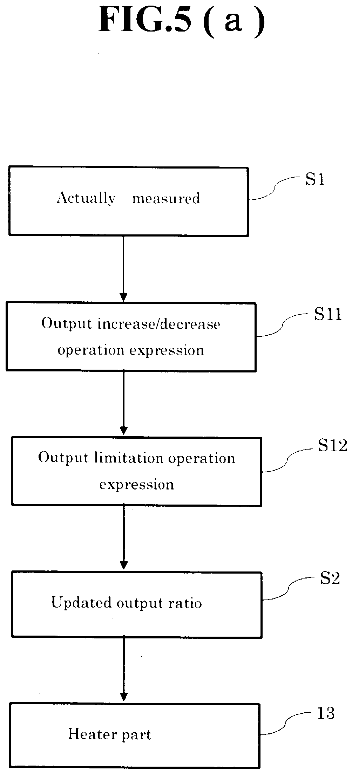

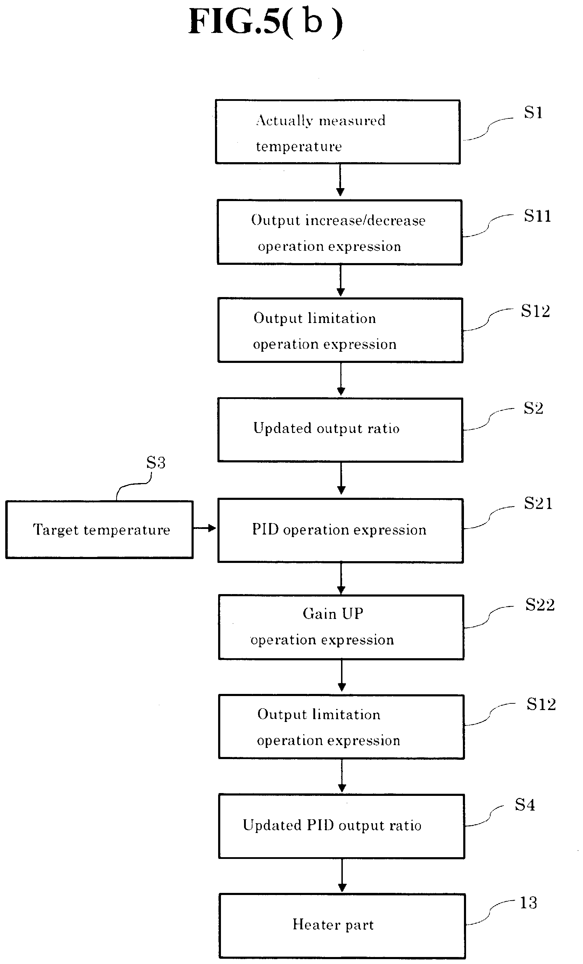

In the controller of the inkjet printer according to the present embodiment, Figure 5A is a block diagram for illustrating a flow of operations performed by the operation part if the temperature difference between the actually measured temperature and the target temperature is not within a predetermined temperature range defined freely, and Figure 5B is a block diagram for illustrating a flow of operations performed by the operation part if the temperature difference between the actually measured temperature and the target temperature is within the predetermined temperature range defined freely.

Here, the "within a predetermined temperature range defined freely" is appropriately set according to conditions such as the material of the medium after printing, a printing system of the printing part, the kind of the ink, the amount of ejection of the ink, and the like.

For example, when the medium after printing is continuous paper, and aqueous ink is printed by a printing head of a line head type, the temperature difference between the actually measured temperature and the target temperature is preferably within $\pm 20°$, and the temperature difference between the actually measured temperature and the target temperature is more preferably within $\pm 10°$ from a viewpoint of the energy efficiency.

Incidentally, regarding whether or not the temperature difference between an actually measured temperature S1 and a target temperature S3 is within the predetermined temperature range defined freely, it does not matter whether or not the actually measured temperature S1 of the section 31a has reached the target temperature S3. That is, even after the actually measured temperature S1 of the section 31a has reached the target temperature S3, a case where the temperature difference between the actually measured temperature S1 of the section 31a and the target temperature S3 is within the predetermined temperature range defined freely is included therein.

In the controller 4, first of all, the heater parts 13 are heated at the initial output ratio.

Thereafter, heating of the heater parts 13 is controlled at the updated output ratios computed by the operation part 44.

As shown in Figure 5A, in the controller 4, after heating is started and if the temperature difference between the actually measured temperature S1 and the target temperature S3 is not within the predetermined temperature range defined freely, the operation part 44 performs operations of an output increase/decrease operation expression S11 and an output limitation operation expression S12 in this order using the actually measured temperature S1 to obtain the next updated output ratio S2.

Then, an output ratio signal of the next updated output ratio S2 is fed to the heater part 13 via the input/output interface part 46, and the heater part 13 is heated at the next updated output ratio S2.

In this manner, in the controller 4, if the temperature difference between the actually measured temperature S1 and the target temperature S3 is not within the predetermined temperature range defined freely, updating of the updated output ratio S2 is performed repeatedly. That is, the updating of the updated output ratios S2 of the heater parts 13 of the respective sections 31a is performed repeatedly by the controller 4 at the timing of an operation cycle of the operation unit.

Thereby, the temperatures of the respective sections 31a can be elevated so as to be equal to one another. In addition, if the temperature difference between the actually measured temperature S1 and the target temperature S3 is not within the predetermined temperature range defined freely, the energy efficiency becomes very excellent.

On the other hand, as shown in Figure 5B, in the controller 4, after heating is started and if the temperature difference between the actually measured temperature S1 and the target temperature S3 is within the predetermined temperature range defined freely, the operation part 44 performs operations of the output increase/decrease operation expression S11 and the output limitation operation expression S12 in this order using the actually measured temperature S1, and further performs an operation of a PID operation expression S21 using a target temperature S3 to obtain a PID output ratio, and performs operations of a gain UP operation expression S22 and the output limitation operation expression S12 in this order to obtain an updated PID output ratio S4.

Then, an output ratio signal of the updated PID output ratio S4 is fed to the heater part 13 via the input/output interface part 46, and the heater part 13 is heated at the updated PID output ratio S4.

In this manner, in the controller 4, if the temperature difference between the actually measured temperature S1 and the target temperature S3 is within a predetermined temperature range defined freely, updating of the updated PID output ratio S4 is performed repeatedly. That is, updating of the updated PID output ratios S4 of the heater parts 13 of the respective sections 31a is performed repeatedly by the controller 4 at the timing of an operation cycle of the operation unit.

Thereby, the temperatures of the respective sections 31a can be elevated so as to be equal to one another. In addition, if the temperature difference between the actually measured temperature S1 and the target temperature S3 is within the predetermined temperature range defined freely, the energy efficiency becomes very excellent.

As the display part 45, a monitor or the like can be appropriately used.

In the controller 4, the actually measured temperatures S1 of the sections 31a and/or the output ratios of the respective sections 31a at that time are displayed on the display part 45. Thereby, the conditions of the sections 31a at that time can be confirmed.

As the input part 40, a keyboard, a mouse, or the like can be appropriately used.

In the controller 4, inputting for setting the above-described initial output ratio or target temperature is performed via the input part 40.

Further, as a part doubling as the display part 45 and the input part 40, a touch-type monitor (a touch screen) can also be adopted.

It is to be noted that the touch-type monitor is preferably adopted in view of convenience.

Next, a control flow of the respective sections 31a is described specifically.

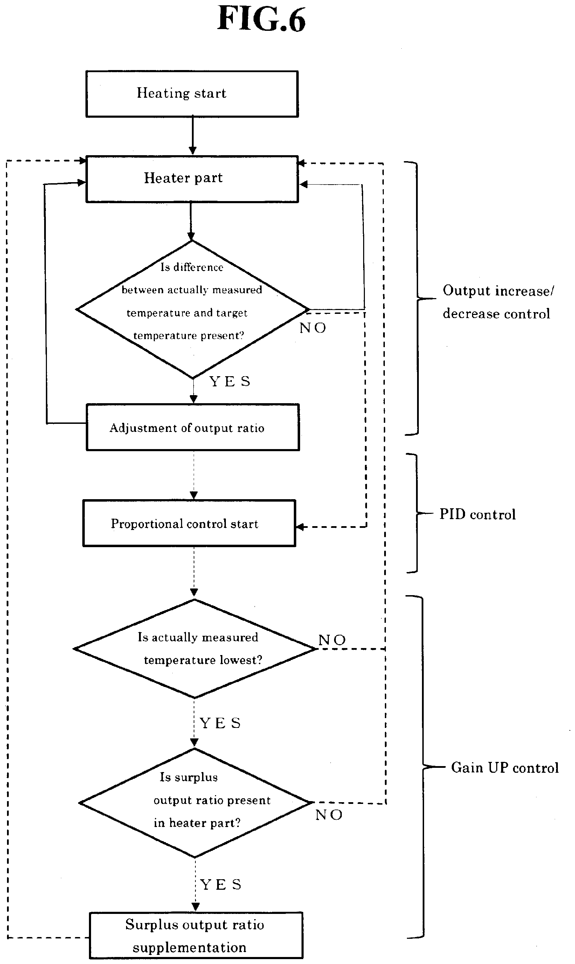

Figure 6 is an illustrative diagram for illustrating a control flow of the heater part in the inkjet printer according to the present embodiment. It is to be noted that, in Figure 6, a flow for a case where the temperature difference between the actually measured temperature S1 and the target temperature S3 is not within the predetermined temperature range defined freely is indicated by a solid line, while a flow for a case where the temperature difference between the actually measured temperature S1 and the target temperature S3 is within the predetermined temperature range defined freely is indicated by a broken line.

As shown in Figure 6, in the inkjet printer 100, first of all, the controller 4 transmits an instruction to start heating with an initial output ratio to the heater part 13.

Thereby, the heater part 13 starts heating with the initial output ratio.

Next, if the temperature difference between the actually measured temperature S1 and the target temperature S3 is not within the predetermined temperature range defined freely, the controller 4 selects whether or not a temperature difference is present between the actually measured temperature S1 of the heater part 13 of each section 31a and the average temperature. It is to be noted that, if such a temperature difference is, for example, 11°C or more, it is judged that the temperature difference is present.

Then, if it is judged that the temperature difference is present (YES), adjustment of the output ratio is performed by the output increase/decrease control based upon the output increase/decrease operation expression S11, and heating of the heating part 13 is performed with the updated output ratio S2 where the output ratio has been adjusted.

On the other hand, if it is judged that the temperature difference is absent (NO), adjustment of the output ratio is not performed, and heating of the heater part 13 is performed using the same output ratio as the updated output ratio S2.

It is to be noted that the updating of the output ratio is performed repeatedly by continuous control, as described above.

Next, if the temperature difference between the actually measured temperature S1 and the target temperature S3 is within the predetermined temperature range defined freely, the controller 4 selects whether or not the temperature difference is present between the actually measured temperature S1 of the heater part 13 of each section 31a and the average temperature.

Then, if it is judged that the temperature difference is present (YES), adjustment of the output ratio is performed by the output increase/decrease control, and the proportional control is started to the updated output ratio S2 where the adjustment of the output ratio has been performed, by PID control based upon the next PID operation expression S21.

On the other hand, if it is judged that the temperature difference is absent (NO), adjustment of the output ratio is not performed, and the proportional control is started to the same output ratio (the updated output ratio S2) by the next PID control.

Next, the controller 4 selects a section 31a having the lowest actually measured temperature S1 among the actually measured temperatures S1 of the heater parts 13 of the sections 31a.

Then, if it is judged that a specific section 31a has the lowest actually measured temperature S1 (YES), or if it is judged that whether the surplus output ratio is present or absent is selected in the heater part 13 of the section 31a and the surplus output ratio is present (YES), supplementation with the surplus output ratio is performed by the gain UP control based on the gain UP operation expression S22, and the heating of the heater part 13 is performed with the supplemented updated PID output ratio S4.

On the other hand, when it is not judged that a specific section 31a has the lowest actually measured temperature S1 (NO), or it is not judged that the surplus output ratio is present (NO), supplementation with the surplus output ratio is not performed, and heating of the heating part 13 is performed using an output ratio subjected to (a PID output ratio) the PID control as the updated PID output ratio S4.

It is to be noted that the updating of the output ratio is performed repeatedly by continuous control, as described above.

Though the preferred embodiment of the present invention has been described above, the present invention is not limited to the above-described embodiment.

In the inkjet printer 100 according to the present embodiment, the printing head of a line head type is used in the printing part, but a printing head of a serial head type can also be used therein.

In the inkjet printer 100 according to the present embodiment, the drying drum 3 is provided with the cylindrical main body portion 31, the disk-shaped rim portions 32 attached to the both ends of the main body portion 31, and the shaft 33 attached to the rim portions 32, but the structure of the drying drum 3 is not limited to this structure.

Further, in the drying drum 3, the main body portion 31 is composed of three sections 31a obtained by dividing the main body portion 31 along the planes perpendicular to the shaft direction, but the number of sections is not limited to this three.

In the inkjet printer 100 according to the present embodiment, the band heater or the rubber heater is adopted as the heater part 13, and the thermocouple is adopted as the temperature detecting part 13b, but the present invention is not limited thereto.

For example, as the temperature detecting part 13b, a non-contact type radiation temperature sensor or the like can be adopted instead of the thermocouple.

In the inkjet printer 100 according to the present embodiment, if the temperature difference between the actually measured temperature S1 and the target temperature S3 is not within the predetermined temperature range defined freely, as shown in Figure 5A, the operation part 44 performs operations of the output increase/decrease operation expression S11 and the output limitation operation expression S12 in this order, and if the temperature difference between the actually measured temperature S1 and the target temperature S3 is within the predetermined temperature range defined freely, as shown in Figure 5B, the operation part 44 performs operations of the output increase/decrease operation expression S11, the output limitation operation expression S12, the PID operation expression S21, the gain UP operation expression S22 and the output limitation operation expression S12 in this order, but the latter operations performed if the temperature difference between the actually measured temperature S1 and the target temperature S3 is within the predetermined temperature range defined freely is not necessarily essential. That is, regardless of whether or not the temperature difference between the actually measured temperature S1 and the target temperature S3 is within the predetermined temperature range defined freely, heating of the heating part may be continuously controlled only by the flow shown in Figure 5A where the operation part 44 performs operations of the output increase/decrease operation expression S11 and the output limitation operation expression S12 in this order.

In the inkjet printer 100 according to the present embodiment, operations are performed according to the plurality of operation expressions described above, but another operation expression may be included unless these expressions are obstructed.

Industrial Applicability

The inkjet printer 100 of the present invention can be utilized as an inkjet printer for performing printing to a medium before printing according to an inkjet system.

According to the inkjet printer 100 of the present invention, temperature unevenness of the drying drum itself can be suppressed as much as possible.

Reference Signs List

1...medium before printing,
100...inkjet printer,
13...heater part,
13a...power supply terminal,
13b...temperature detecting part,
13c...thermostat,
1a...medium after printing,
2...guide roll,
3...drying drum,
31...main body portion,
31a...section,
31a1...first section (section),
31a2...second section (section),
31a3...third section (section),
32...rim portion,
33...shaft,
4...controller,
40...input part,
41...initial output ratio setting part,
42...target temperature setting part,
43...storage part,
44...operation part,
45...display part,

46...input/output interface part, and
5...printing part

**Claims**

1. A controlling method of an inkjet printer wherein

   the inkjet printer (100) comprising a printing part (5) for applying ink to a medium before printing (1), a drying drum (3) for heating and drying a medium after printing (la) having the ink applied in contact with an outer circumstantial face of the drying drum (3), controller (4) capable of individually controlling heating of a plurality of sections (31a) obtained by dividing the drying drum (3) along a plane perpendicular to a shaft direction of the drying drum (3), and guide rolls (2) guiding the medium,
   the medium is an elongated medium,
   each of the sections (31a) is mounted with a heater part (13) capable of heating the corresponding section, and heating of the heater parts (13) of all of the sections (31a) is continuously controlled individually by the controller (4),
   the heating parts (13) can heat the sections (31a) according to output ratios which are percentages of output capacities of the sections;
   each of the sections (31a) is further mounted with a temperature detecting part (13b) for detecting a temperature of the corresponding section (31a) individually;
   the controller (4) has an initial output ratio setting part (41) for setting an initial output ratio, a target temperature setting part (42) for setting target temperatures (S3) of the plurality of sections, a storage part (43) for storing an output increase/decrease operation expression (S11) and an output limitation operation expression (S12), and an operation part (44) for computing the output ratios sequentially based upon the output increase/decrease operation expression (S11) and the output limitation operation expression (S12);
   the output increase/decrease operation expression (S11) is used to obtain an additional output ratio by multiplying by a coefficient set freely a temperature difference obtained by subtracting one of actually measured temperatures (S1) detected by the temperature detecting parts (13b) of the sections (31a) from an average temperature of the actually measured temperatures (S1), and to add the additional output ratio to the initial output ratio of the corresponding section (31a);
   the output limitation operation expression (S12) is used to adopt the output ratio having the additional output ratio added based upon the output increase/decrease operation expression (S11) as an updated output ratio (S2) if the output ratio is 100% or less, and to adopt the output ratio of 100% as an updated output ratio (S2) if the output ratio exceeds 100%;
   and
   by the controller (4), heating starts of the heater parts (13) of the respective sections (31a) are controlled with the initial output ratio set freely, and heating of the heater parts (13) of the respective sections (31a) after the heating starts is continuously controlled with the updated output ratio (S2).

2. A controlling method of an inkjet printer (100) according to claim 1, wherein the storage part (43) further stores a PID operation expression (S21) therein;

   the operation part (100) further computes the updated output ratio (S2) based upon the PID operation expression (S21) if the temperature difference between the actually measured temperature (S1) and the target temperature is within a predetermined temperature range defined freely;
   the PID operation expression (S21) is used to convert the updated output ratio (S2) into a PID output ratio based upon elements of a deviation between the actually measured temperature (S1) and the target temperature, an integral of the deviation, and a differential of the deviation; and
   by the controller (4), heating of the heater parts (13) of the respective sections (31a) is continuously controlled with the PID output ratios.

3. A controlling method of an inkjet printer (100) according to claim 1, wherein the storage part (43) further stores a PID operation expression (S21) and a gain UP operation expression (S22) therein;

   the operation part (44) further operates the updated output ratio (S2) based upon the PID operation expression (S21) and the gain UP operation expression (S22) if the temperature difference between the actually measured temperature (S1) and the target temperature is within a predetermined temperature range defined freely;

the PID operation expression (S21) is used to convert the updated output ratio (S2) into a PID output ratio based upon elements of a deviation between the actually measured temperature (S1) and the target temperature, an integral of the deviation, and a differential of the deviation;

the gain UP operation expression (S22) is used to add a surplus output ratio obtained by subtracting the PID output ratio of each of the heater parts (13) of the sections (31a) from the updated output ratio (S2) of the sections (31a) to the PID output ratio of the heater part (13) of the section (31a) the actually measured temperature (S1) of which is low;

the output limitation operation expression (S12) is used to adopt the PID output ratio having the surplus output ratio added based on the gain UP operation expression (S22) as an updated PID output ratio (S4) if the PID output ratio is 100% or less, and to adopt the output ratio of 100% as the updated PID output ratio (S4) if the updated PID output ratio exceeds 100%; and

by the controller (4), heating of the heater parts (13) of the respective sections (31a) is continuously controlled with the updated PID output ratio (S4).

4. A controlling method of an inkjet printer (100) according to any one of claims 1 to 43, wherein the printing part (5) has a printing head of a line head type; and

the heater part (13) is a band heater or a rubber heater attached along an inner circumstantial face of the drying drum (3).

**Patentansprüche**

1. Steuerverfahren eines Tintenstrahldruckers, wobei

der Tintenstrahldrucker (100) ein Druckteil (5) zum Aufbringen von Tinte auf ein Medium vor dem Drucken (1), eine Trocknungstrommel (3) zum Erwärmen und Trocknen eines Mediums nach dem Drucken (1a), wobei die Tinte in Kontakt mit einer äußeren Umfangsfläche der Trocknungstrommel (3) aufgebracht wird, eine Steuereinrichtung (4), die in der Lage ist, das Erwärmen einer Vielzahl von Abschnitten (31a), die durch Unterteilen der Trocknungstrommel (3) entlang einer Ebene senkrecht zu einer Wellenrichtung der Trocknungstrommel (3) erhalten sind, individuell zu steuern, und Führungsrollen (2), die das Medium führen, umfasst,

das Medium ein längliches Medium ist,

jeder der Abschnitte (31a) mit einem Heizteil (13) versehen ist, der in der Lage ist, den entsprechenden Abschnitt zu erwärmen, und das Erwärmen der Heizteile (13) aller Abschnitte (31a) durch die Steuereinrichtung (4) kontinuierlich individuell gesteuert wird,

die Heizteile (13) die Abschnitte (31a) gemäß Ausgabeverhältnissen erwärmen können, die Prozentsätze der Ausgabekapazitäten der Abschnitte sind;

jeder der Abschnitte (31a) ferner mit einem Temperaturerfassungsteil (13b) zum individuellen Erfassen einer Temperatur des entsprechenden Abschnitts (31a) versehen ist;

die Steuereinrichtung (4) einen anfänglichen Ausgabeverhältnis-Einstellteil (41) zum Einstellen eines anfänglichen Ausgabeverhältnisses, einen Zieltemperatur-Einstellteil (42) zum Einstellen von Zieltemperaturen (S3) der mehreren Abschnitte, einen Speicherteil (43) zum Speichern eines Ausgabeerhöhungs-/verringerungs-Betrieb-Ausdrucks (S11) und eines Ausgabebegrenzungs-Betrieb-Ausdrucks (S12) und einen Betriebsteil (44) zum sequentiellen Berechnen der Ausgabeverhältnisse auf der Grundlage des Ausgabeerhöhungs-/verringerungs-Betrieb-Ausdrucks (S11) und des Ausgabebegrenzungs-Betrieb-Ausdrucks (S12) aufweist;

der Ausgabeerhöhungs-/-verringerungs-Betrieb-Ausdruck (S11) verwendet wird, um ein zusätzliches Ausgabeverhältnis zu erhalten, indem mit einem Koeffizienten multipliziert wird, der eine Temperaturdifferenz frei festlegt, die erhalten wird, indem eine der tatsächlich gemessenen Temperaturen (S1), die durch die Temperaturerfassungsteile (13b) der Abschnitte (31a) erfasst werden, von einer Durchschnittstemperatur der tatsächlich gemessenen Temperaturen (S1) subtrahiert wird, und um das zusätzliche Ausgabeverhältnis zu dem anfänglichen Ausgabeverhältnis des entsprechenden Abschnitts (31a) zu addieren;

der Ausgabebegrenzungs-Betrieb-Ausdruck (S12) verwendet wird, um das Ausgabeverhältnis, zu dem das zusätzliche Ausgabeverhältnis auf der Grundlage des Ausgabeerhöhungs-/verringerungs-Betrieb-Ausdrucks (S11) hinzugefügt wurde, als ein aktualisiertes Ausgabeverhältnis (S2) anzunehmen, wenn das Ausgabeverhältnis 100% oder weniger beträgt, und um das Ausgabeverhältnis von 100% als ein aktualisiertes Ausgabeverhältnis (S2) anzunehmen, wenn das Ausgabeverhältnis 100% überschreitet; und

durch die Steuereinrichtung (4) die Heizstarts der Heizteile (13) der jeweiligen Abschnitte (31a) mit dem frei eingestellten anfänglichen Ausgabeverhältnis gesteuert werden, und das Erwärmen der Heizteile (13) der jeweiligen Abschnitte (31a) nach den Heizstarts mit dem aktualisierten Ausgabeverhältnis (S2) kontinuierlich gesteuert wird.

2. Steuerverfahren eines Tintenstrahldruckers (100) nach Anspruch 1, wobei der Speicherteil (43) ferner einen PID-Betrieb-Ausdruck (S21) speichert;

der Betriebsteil (100) ferner das aktualisierte Ausgabeverhältnis (S2) auf der Grundlage des PID-Betrieb-Ausdrucks (S21) berechnet, wenn die Temperaturdifferenz zwischen der tatsächlich gemessenen Temperatur (S1) und der Zieltemperatur innerhalb eines vorbestimmten, frei definierten Temperaturbereichs liegt;

der PID-Betrieb-Ausdruck (S21) verwendet wird, um das aktualisierte Ausgabeverhältnis (S2) in ein PID-Ausgabeverhältnis umzuwandeln, das auf den Elementen einer Abweichung zwischen der tatsächlich gemessenen Temperatur (S1) und der Zieltemperatur, einem Integral der Abweichung und einem Differential der Abweichung basiert; und

durch die Steuereinrichtung (4) das Erwärmen der Heizteile (13) der jeweiligen Abschnitte (31a) mit den PID-Ausgabeverhältnissen kontinuierlich gesteuert wird.

3. Steuerverfahren eines Tintenstrahldruckers (100) gemäß Anspruch 1, wobei der Speicherteil (43) ferner einen PID-Betrieb-Ausdruck (S21) und einen Gain UP-Betrieb-Ausdruck (S22) darin speichert;

der Betriebsteil (44) ferner das aktualisierte Ausgabeverhältnis (S2) auf der Grundlage des PID-Betrieb-Ausdrucks (S21) und des Gain UP-Betrieb-Ausdrucks (S22) betreibt, wenn die Temperaturdifferenz zwischen der tatsächlich gemessenen Temperatur (S1) und der Zieltemperatur innerhalb eines vorbestimmten Temperaturbereichs liegt, der frei definiert ist;

der PID-Betrieb-Ausdruck (S21) verwendet wird, um das aktualisierte Ausgabeverhältnis (S2) in ein PID-Ausgabeverhältnis umzuwandeln, das auf Elementen einer Abweichung zwischen der tatsächlich gemessenen Temperatur (S1) und der Zieltemperatur, einem Integral der Abweichung und einem Differential der Abweichung basiert;

der Gain UP-Betrieb-Ausdruck (S22) verwendet wird, um ein überschüssiges Ausgabeverhältnis, das durch Subtrahieren des PID-Ausgabeverhältnisses jedes der Heizteile (13) der Abschnitte (31a) von dem aktualisierten Ausgabeverhältnis (S2) der Abschnitte (31a) erhalten wird, zu dem PID-Ausgabeverhältnis des Heizteils (13) des Abschnitts (31a) zu addieren, dessen tatsächlich gemessene Temperatur (S1) niedrig ist;

der Ausgabebegrenzungs-Betrieb-Ausdruck (S12) verwendet wird, um das PID-Ausgabeverhältnis, zu dem das überschüssige Ausgabeverhältnis auf der Grundlage des Gain UP-Betrieb-Ausdrucks (S22) addiert wird, als aktualisiertes PID-Ausgabeverhältnis (S4) anzunehmen, wenn das PID-Ausgabeverhältnis 100 % oder weniger beträgt, und um das Ausgabeverhältnis von 100 % als das aktualisierte PID-Ausgabeverhältnis (S4) anzunehmen, wenn das aktualisierte PID-Ausgabeverhältnis 100 % überschreitet; und

durch die Steuereinrichtung (4) das Erwärmen der Heizteile (13) der jeweiligen Abschnitte (31a) mit dem aktualisierten PID-Ausgabeverhältnis (S4) kontinuierlich gesteuert wird.

4. Steuerverfahren eines Tintenstrahldruckers (100) nach einem der Ansprüche 1 bis 3, wobei der Druckteil (5) einen Druckkopf vom Zeilenkopftyp aufweist; und

der Heizteil (13) ein Bandheizelement oder ein Gummiheizelement ist, das entlang einer inneren Umfangsfläche der Trocknungstrommel (3) angebracht ist.

**Revendications**

1. Un procédé de contrôle d'une imprimante à jet d'encre qui se compose des éléments suivants :

l'imprimante à jet d'encre (100) qui se compose d'une partie impression (5) qui projette de l'encre sur un support avant d'effectuer l'impression proprement dite (1), un tambour de séchage (3) qui chauffe et sèche ce support une fois l'impression terminée (la) en amenant l'encre au contact d'une face périphérique externe du tambour de séchage (3), et le contrôleur (4), qui est en mesure de contrôler individuellement le chauffage d'une pluralité de sections (31a) obtenue en divisant le tambour de séchage (3) le long d'un plan perpendiculaire au sens de l'axe de ce tambour de séchage (3), et des rouleaux de guidage (2) qui assurent le guidage du support, ce support a un profil allongé,

chaque section (31a) comporte un composant de chauffage (13) qui est en mesure d'assurer le chauffage de la section correspondante, et le chauffage des composants de chauffage (13) de toutes les sections (31a) fait l'objet d'un contrôle en continu effectué par le contrôleur (4),

les composants de chauffage (13) sont en mesure d'assurer le chauffage des sections (31a) en fonction des rapports de sortie qui s'expriment sous la forme de pourcentages des capacités de sortie des sections

en outre, chaque section (31a) est équipée d'un composant de détection de température (13b) qui a pour tâche de détecter la température de la section individuelle correspondante (31a)

le contrôleur (4) a un composant de programmation du rapport initial de sortie (41) et ce composant est conçu pour programmer un rapport initial de sortie ; ce contrôleur a également un composant de programmation des températures cibles (42) et ce composant est conçu pour programmer des températures cibles (S3) dans la pluralité de sections ; ce contrôleur a, en outre, un composant de mémorisation (43) qui est conçu pour mémoriser des expressions opérationnelles qui indiquent les augmentations et diminutions de températures en sortie (S11), alors qu'une autre expression opérationnelle indique les limites en sortie (S12) ; enfin, ce contrôleur a un composant opérationnel (44) qui est conçu pour calculer les rapports de sortie, en fonction d'éléments séquentiels basés sur l'expression opérationnelle de détermination des augmentations et diminutions en sortie (S11) et sur l'expression opérationnelle des limites en sortie (S12)

l'expression opérationnelle des augmentations et diminutions en sortie (S11) s'utilise pour obtenir un rapport supplémentaire de sortie en multipliant par un coefficient défini librement un différentiel de température obtenu en soustrayant une des températures réelles mesurées (S1) et détectées par des composants chargés de détecter des températures (13b) dans les sections (31a) d'une température moyenne provenant des températures réelles mesurées (S1), puis en ajoutant le rapport supplémentaire de sortie au rapport initial de sortie de la section correspondante (31a)

l'expression opérationnelle de limitation de sortie (S12) s'utilise pour adopter le rapport de sortie auquel a été ajouté le rapport supplémentaire de sortie basé sur l'expression opérationnelle des augmentations et diminutions en sortie (S11) en tant que rapport actualisé de sortie (S2) lorsque le rapport de sortie est inférieur ou égal à 100% et pour adopter le rapport de sortie de 100% en tant que rapport actualisé de sortie (S2) lorsque le rapport de sortie dépasse 100%

et par le contrôleur (4), les démarrages du chauffage des composants de chauffage (13) des sections respectives (31a) sont régulés avec le rapport initial de sortie programmé librement, et le chauffage des composants de chauffage (13) des sections respectives (31a), après ces démarrages du chauffage, font l'objet d'un contrôle en continu avec le rapport actualisé de sortie (S2).

**2.** Le procédé de contrôle d'une imprimante à jet d'encre (100) que décrit la revendication 1, si ce n'est que le composant de mémorisation (43) mémorise en outre une expression opérationnelle PID (S21)

le composant opérationnel (100), en outre, calcule le rapport actualisé de sortie (S2) en se basant sur l'expression opérationnelle PID (S21) lorsque le différentiel de température entre la température mesurée réelle (S1) et la température cible se situe dans une plage prédéterminée définie

l'expression opérationnelle PID (S21) s'utilise pour convertir le rapport actualisé de sortie (S2) en un rapport de sortie PID basé sur des éléments d'un écart entre la température mesurée réelle (S1) et la température cible, un nombre entier de cet écart et un différentiel de cet écart et

par le contrôleur (4), le chauffage des composants de chauffage (13) des sections respectives (31a) fait l'objet d'un contrôle en continu à l'aide des rapports de sortie PID.

**3.** Le procédé de contrôle d'une imprimante à jet d'encre (100) que décrit la revendication 1, si ce n'est que le composant de mémorisation (43) mémorise en outre une expression opérationnelle PID (S21) et une expression opérationnelle du gain VERS LE HAUT (S22)

le composant opérationnel (44), en outre, exploite le rapport actualisé de sortie (S2) en se basant sur l'expression opérationnelle PID (S21) et l'expression opérationnelle du gain VERS LE HAUT (S22) lorsque le différentiel de température entre la température mesurée réelle (S1) et la température cible se situe dans une plage prédéterminée définie

l'expression opérationnelle PID (S21) s'utilise pour convertir le rapport actualisé de sortie (S2) en un rapport de sortie PID basé sur des éléments d'un écart entre la température mesurée réelle (S1) et la température cible, un nombre entier de cet écart et un différentiel de cet écart et

l'expression opérationnelle du gain VERS LE HAUT (S22) s'utilise pour ajouter un rapport de sortie du surplus obtenu en soustrayant le rapport de sortie PID de chacun des composants de chauffage (13) des sections (31a) du rapport actualisé de sortie (S2) des sections (31a), puis en ajoutant au rapport de sortie PID du composant de chauffage (13) de la section (31a), la température mesurée réelle (S1), qui est basse

l'expression opérationnelle de limitation de sortie (S12) s'utilise pour adopter le rapport de sortie PID auquel a été ajouté le rapport de sortie du surplus basé sur l'expression opérationnelle de gain VERS LE HAUT (S22) en tant que rapport actualisé de sortie PID (S4) lorsque le rapport de sortie PID est inférieur ou égal à 100% et pour adopter le rapport de sortie de 100% en tant que rapport actualisé de sortie PID (S4) lorsque le rapport actualisé de sortie PID dépasse 100% et

par le contrôleur (4), le chauffage des composants de chauffage (13) des sections respectives (31a) fait l'objet d'un contrôle en continu à l'aide du rapport actualisé de sortie PID (S4).

4. Le procédé de contrôle d'une imprimante à jet d'encre (100) que décrit l'une ou l'autre des revendications 1 à 3, si ce n'est que la partie impression (5) a une tête d'impression du type à tête linéaire et

le composant de chauffage (13) est une bande de chauffage ou un dispositif de chauffage en caoutchouc qui vient se fixer le long d'une face périphérique interne du tambour de chauffage (3).

# FIG.1

# FIG.2

# FIG.3

# FIG.4

EP 3 663 093 B1

# FIG.5 ( a )

Actually measured — S1

↓

Output increase/decrease operation expression — S11

↓

Output limitation operation expression — S12

↓

Updated output ratio — S2

↓

Heater part — 13

# FIG.5( b )

```
┌─────────────────────────┐
│   Actually measured     │ ──── S1
│      temperature        │
└─────────────────────────┘
            │
            ▼
┌─────────────────────────┐
│  Output increase/decrease │ ──── S11
│   operation expression  │
└─────────────────────────┘
            │
            ▼
┌─────────────────────────┐
│    Output limitation    │ ──── S12
│   operation expression  │
└─────────────────────────┘
            │
            ▼
┌─────────────────────────┐
│   Updated output ratio  │ ──── S2
└─────────────────────────┘
            │
            ▼
        S3
┌──────────────────┐  ┌─────────────────────────┐
│ Target temperature │─▶│  PID operation expression │ ──── S21
└──────────────────┘  └─────────────────────────┘
            │
            ▼
┌─────────────────────────┐
│        Gain UP          │ ──── S22
│   operation expression  │
└─────────────────────────┘
            │
            ▼
┌─────────────────────────┐
│    Output limitation    │ ──── S12
│   operation expression  │
└─────────────────────────┘
            │
            ▼
┌─────────────────────────┐
│  Updated PID output ratio │ ──── S4
└─────────────────────────┘
            │
            ▼
┌─────────────────────────┐
│       Heater part       │ ──── 13
└─────────────────────────┘
```

# FIG.6

```
        ┌─────────────────────────┐
        │      Heating start       │
        └─────────────────────────┘
                    │
                    ▼
        ┌─────────────────────────┐
        │       Heater part        │◄─────────┐
        └─────────────────────────┘          │
                    │                          │
                    ▼                          │
              Is difference                    │
          between actually measured            │
          temperature and target     ─── NO ───┘
          temperature present?

                YES
                    │
                    ▼
        ┌─────────────────────────┐
        │  Adjustment of output    │
        │         ratio            │
        └─────────────────────────┘
                    ┊
                    ▼
        ┌─────────────────────────┐
        │ Proportional control     │◄┄┄┄┄
        │        start             │
        └─────────────────────────┘
                    ┊
                    ▼
           Is actually measured    ┄┄ NO ┄┄
            temperature lowest?

                YES
                    ┊
                    ▼
              Is surplus
           output ratio present  ┄┄ NO ┄┄
             in heater part?

                YES
                    ┊
                    ▼
        ┌─────────────────────────┐
        │  Surplus output ratio    │
        │     supplementation      │
        └─────────────────────────┘
```

Output increase/
decrease control

PID control

Gain UP control

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8646893 B2
- EP 3070533 A1
- US 8596777 B2
- US 9815296 B2
- EP 3034310 A1
- WO 0131271 A1

- JP 2001141364 A
- JP 2009226755 A
- JP 2012131065 A
- JP 2015112543 A
- JP 2015205476 A